(19) Europäisches Patentamt / European Patent Office / Office européen des brevets

(11) **EP 4 325 323 B1**

(12) **EUROPEAN PATENT SPECIFICATION**

(45) Date of publication and mention
of the grant of the patent:
**21.01.2026 Bulletin 2026/04**

(21) Application number: **21857367.3**

(22) Date of filing: **30.06.2021**

(51) International Patent Classification (IPC):
**G05D 9/12** *(2006.01)*  **G05D 9/00** *(2006.01)*

(52) Cooperative Patent Classification (CPC):
**G05D 9/12;** Y02E 30/00

(86) International application number:
**PCT/CN2021/103417**

(87) International publication number:
**WO 2022/037271 (24.02.2022 Gazette 2022/08)**

(54) **LIQUID LEVEL CONTROL METHOD, APPARATUS AND DEVICE FOR DEAERATOR OF NUCLEAR POWER UNIT**

**VERFAHREN, VORRICHTUNG UND VORRICHTUNG ZUR FLÜSSIGKEITSSTANDSREGELUNG FÜR ENTLÜFTER EINER KERNKRAFTEINHEIT**

**PROCÉDÉ, APPAREIL ET DISPOSITIF DE COMMANDE DE NIVEAU DE LIQUIDE POUR DÉGAZEUR D'UNITÉ DE PUISSANCE NUCLÉAIRE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2021 CN 202110217874**

(43) Date of publication of application:
**21.02.2024 Bulletin 2024/08**

(73) Proprietors:
- **China Nuclear Power Engineering Co., Ltd.**
  **Shenzhen, Guangdong 518124 (CN)**
- **China General Nuclear Power Corporation**
  **Shenzhen, Guangdong 518026 (CN)**
- **CGN Power Co., Ltd.**
  **Shenzhen, Guangdong 518026 (CN)**

(72) Inventors:
- **LI, Xiaoqiang**
  **Shenzhen, Guangdong 518124 (CN)**
- **YIN, Yahua**
  **Shenzhen, Guangdong 518124 (CN)**
- **SONG, Yuliang**
  **Shenzhen, Guangdong 518124 (CN)**
- **YANG, Guang**
  **Shenzhen, Guangdong 518124 (CN)**

(74) Representative: **Greaves Brewster LLP**
**Copa House**
**Station Road**
**Cheddar, Somerset BS27 3AH (GB)**

(56) References cited:
CN-A- 101 329 585    CN-A- 102 543 235
CN-A- 104 637 557    CN-A- 108 385 599
CN-A- 113 031 663    CN-U- 210 088 824
JP-A- 2011 174 673    KR-A- 20050 010 328
KR-B1- 100 584 835    US-A1- 2016 189 807

- ZHANG XIN-LING, WANG HUI- FANG, LIANG XIAO- MING, LI ZHI- GUANG,CHENG PU: "Application of JX-300XP in CE2000 Cascade Control System", RESEARCH PROGRESS OF POLYMYXIN B. CAOL AND CHEMICAL INDUSTRY - MEITAN YU HUAGONG, HEBEI SHENG MEITAN KEXUE YANJIUYUAN, CN, vol. 36, no. 6, 31 October 2013 (2013-10-31), CN , XP055901145, ISSN: 2095-5979

## Description

### FIELD OF THE INVENTION

The present invention generally relates to nuclear power plants and, more particularly, relates to a liquid level control method, apparatus and device for deaerator of nuclear power unit.

### BACKGROUND OF THE INVENTION

The liquid level control of a deaerator in a nuclear power plant affects the stability of control and operation of the secondary circuit of nuclear power plant. The liquid level control must be applied to steady state condition and transient condition. Abnormal load change during nuclear power unit operation will cause sudden change in water supply and water consumption, resulting in great level disturbance.

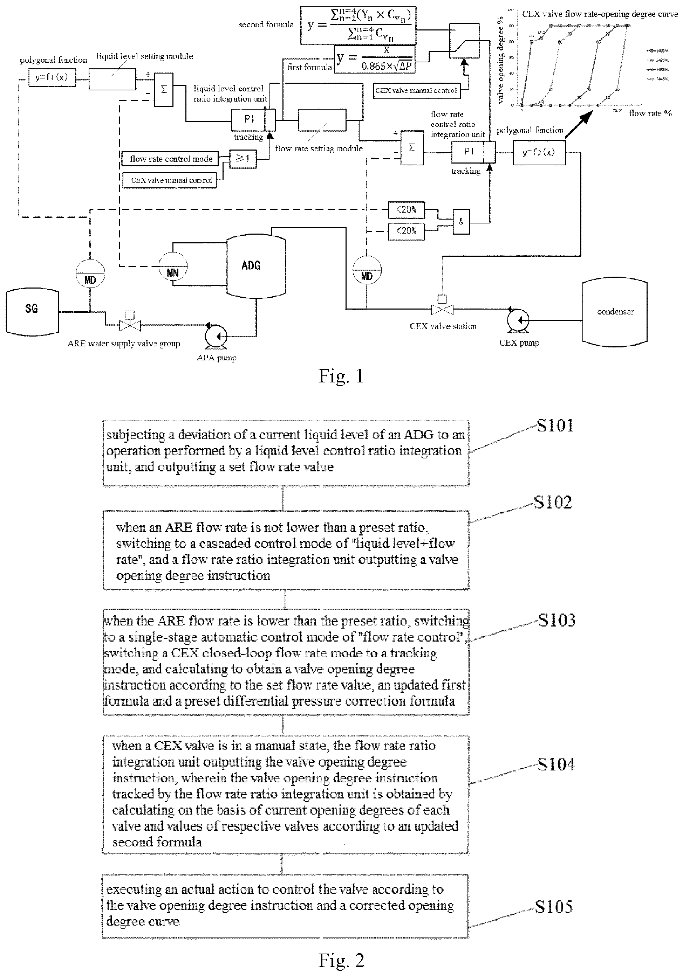

For the first time, the deaerator of the first reactor project of some nuclear power units adopts the cascade mode of "liquid level + flow rate" to control the ADG (feedwater deaerating tank and gas stripper) liquid level. The control diagram is shown in Fig. 1. The sum of ARE (feedwater flow control) flow rate represents the load level of the secondary circuit. When the load of the secondary circuit increases, the ADG target liquid level will increase correspondingly and the volume expansion of the secondary circuit medium is absorbed by the change of the water loading of the deaerator. The deviation of the liquid level is operated via the liquid level control PI 1 to output a set flow rate value.

When the ARE flow rate is higher than 20%, i.e. when the load is higher than 20% , the control mode is automatically switched to the cascade control of "liquid level+flow rate", and the closed-loop control of flow rate PI 2 is automatically switched on, the output value of flow rate PI 2 is the valve station opening degree signal.

When the ARE flow rate is lower than 20%, switching to the "flow rate" single-stage automatic control mode. CEX (condensate extraction) closed-loop flow rate is switched to a tracking mode, the valve opening degree instructions are calculated according to the flow rate set value via a first formula.

When the CEX valve is in a manual state, the valve opening degree signal tracked by the flow rate PI 2 are calculated according to the current opening degrees of each valve and each valve $C_V$ value via a second formula.

However, the prior art has the following disadvantages:

1. Under the low load mode, duiring the switch of manual control of the ADG liquid level to the automatic control mode, the disturbance is big and the response is slow. At the CEX valve station automatic control moment, the valve of the CEX valve station shuts down quickly, the liquid level automatic control input is difficult.

2. During the process of the nuclear power unit flushing and grid connection, the ADG liquid level single-stage "flow rate" control mode and the "liquid level + flow rate" cascade control mode are frequently switched. When the CEX flow rate changes greatly, the pressure inside the ADG changes greatly, thereby triggering the pressure-keeping function of the ADG and causing the action of the safety valve. The liquid level control may affect the pressure control, which may lead to unstable operation of the deaerator.

3. Under high load transient condition, the response lag of CEX valve station is obvious. In 60% reactor jump condition, the ADG level reaches the high 3 threshold and triggers the chain unit jump. In 60% unit jump condition, the ADG level reaches the high 2 threshold and triggers deaerator isolation.

KR20050010328A relates to a feedwater control system reflecting operating differential pressure of a feedwater control valve of a nuclear power plant and a control method thereof, concerned with regularly maintaining operating differential pressure of a feedwater control valve in a nuclear power plant regardless of the kinds or the number of feedwater devices.

US2016/189807A1 relates to a steam generator level control system and method of preventing oscillation of steam generator level.

KR100584835B1 relates to a feedwater control system for steam generator in nuclear power plant and control method thereof.

### SUMMARY OF THE INVENTION

The present invention relates to a liquid level control method for deaerator of nuclear power unit, and a liquid level control apparatus for deaerator of nuclear power unit according to the claims.

One object of the present invention is to provide a liquid level control method, apparatus and device for deaerator of nuclear power unit, to overcome the disadvantages in the prior art.

According to one embodiment of the present invention, a liquid level control method for deaerator of nuclear power unit, includes the steps of:

subjecting a deviation of a current liquid level of an ADG to an operation performed by a liquid level control ratio integration unit, and outputting a set flow rate value;

when an ARE flow rate is not lower than a preset ratio, switching to a "liquid level+ flow rate" cascaded control mode, and outputting a valve opening degree instruction by a flow rate ratio integration unit;

when the ARE flow rate is lower than the preset ratio, switching to a "flow rate control" single-stage automatic control mode, switching a CEX closed-loop flow rate mode to a tracking mode, and calculating to obtain a current valve opening degree instruction according to the set flow rate value, an updated first formula and a preset differential pressure correction formula;

when a CEX valve is in a manual state, the flow rate ratio integration unit outputting the valve opening degree instruction, wherein the valve opening degree instruction tracked by the flow rate ratio integration unit is obtained by calculating on the basis of current opening degrees of each valve and values of respective valves according to an updated second formula;

executing an actual action to control the valve according to the valve opening degree instruction and a corrected opening degree curve.

According to one aspect of the present invention, the liquid level control method for deaerator of nuclear power unit further includes the steps of:
in triggering transient working hours, switching a PI parameter of the liquid level control ratio integration unit from steady state parameter to transient parameter, and controlling an output value of the flow rate ratio integration unit to respond correspondingly, to slow down sudden increase of liquid level.
According to one aspect of the present invention, the first formula is

$$Y = \frac{Q}{Q_n}$$

wherein Y is a valve opening degree instruction, Q is a flow rate through the valve, Qn is an actual circulation capacity of the valve, $Q_{Nn}$ is a design circulation capacity of each valve, and $Q_n = \sum_{N=1}^{N=4} Q_{Nn}$ .
According to one aspect of the present invention, the second formula is

$$Y = \frac{\sum_{N=1}^{N=4} Y_N \times Q_{Nn}}{Q_n} \times \frac{\sqrt{\Delta P}}{\sqrt{\Delta P_n}}$$

wherein $Y_N$ is a valve opening degree instruction of each valve, $\Delta P_n$ is a design differential pressure of the valve, and $\Delta P$ is an actual differential pressure of the valve.

According to one aspect of the present invention, the differential pressure correction formula is $Y = \frac{\sqrt{\Delta P_n}}{\sqrt{\Delta P}}$ .

According to one aspect of the present invention, the preset ratio is 30%.
According to one aspect of the present invention, the corrected opening degree curve is configured to ensure linear relationship between the valve opening degree instruction and the flow rate.
According to another embodiment of the present invention, a liquid level control apparatus for deaerator of nuclear power unit includes:

an arithmetic unit, configured for subjecting a deviation of a current liquid level of an ADG to an operation performed by a liquid level control ratio integration unit, and outputting a set flow rate value;

a first switch unit, when an ARE flow rate is not lower than a preset ratio, configured for switching to a "liquid level+flow rate" cascaded control mode, and outputting a valve opening degree instruction by a flow rate ratio integration unit;

a second switch unit, when the ARE flow rate is lower than the preset ratio, configured for switching to a "flow rate control" single-stage automatic control mode, switching a CEX closed-loop flow rate mode to a tracking mode, and calculating to obtain a current valve opening degree instruction according to the set flow rate value, a first formula and a preset differential pressure correction formula;

a manual control unit, when a CEX valve is in a manual state, configured for outputting the valve opening degree instruction by the flow rate ratio integration unit, wherein the valve opening degree instruction tracked by the flow rate ratio integration unit is obtained by calculating on the basis of current opening degrees of each valve and values of respective valves according to an updated second formula;

an execution unit, configured for executing an actual action to control the valve according to the valve opening degree instruction and a corrected opening degree curve.

According to yet another embodiment of the present invention, a liquid level control device for deaerator of nuclear power unit, includes a memory stored with a computer program and a processor, the computer program can be executed by the processor, to perform the liquid level control method for deaerator of nuclear power unit of the present invention.

## BRIEF DESCRIPTION OF THE DRAWINGS

**In** order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.

Fig. 1 is a schematic diagram of a liquid level control method for deaerator of nuclear power unit in the prior art;

Fig. 2 is a flow chart of a liquid level control method for deaerator of nuclear power unit according to a first embodiment of the present invention;

Fig. 3 is a schematic diagram of the liquid level control method for deaerator of nuclear power unit according to the first embodiment of the present invention;

Fig. 4 is a control schematic diagram of the transient dual PI according to the first embodiment of the present invention; and

Fig. 5 is a block diagram of a liquid level control apparatus for deaerator of nuclear power unit according to another embodiment of the present invention.

## DETAILED DESCRIPTION OF THE INVENTION

The technical solution of the embodiments of the present invention will be described clearly and completely in view of the attached drawings, in which only part of not all embodiments of the present invention are shown. Based on the embodiments of the present invention as described, other embodiments obtained by one ordinary skilled in the art without creative work fall within the scope of the present invention.

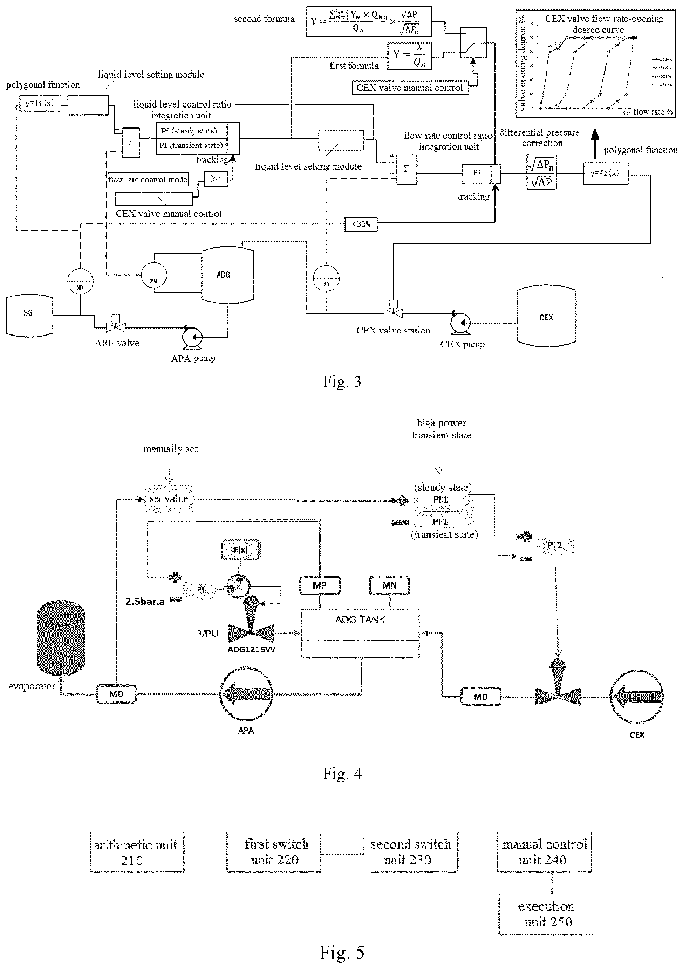

Referring to Figs. 2 and 3, a first embodiment of the present invention provides a liquid level control method for deaerator of nuclear power unit including the steps of:

S101, subjecting a deviation of a current liquid level of an ADG to an operation performed by a liquid level control ratio integration unit, and outputting a set flow rate value;

S102, when an ARE flow rate is not lower than a preset ratio, switching to a "liquid level + flow rate" cascaded control mode, and outputting a valve opening degree instruction by a flow rate ratio integration unit;

In the present embodiment, in general, the condition for a single-stage to cascade switch is that the CEX flow rate and the ARE flow rate are not lower than 20%. Since the CEX flow rate is both triggered and regulated, a single cascade control switching condition with CEX not less than 20% threshold can not be established stably. Therefore, the trigger condition of CEX flow rate switching to cascade control is removed, and only the ARE flow rate is kept as the trigger condition from single-stage to cascade switching.

In the present embodiment, for the EPR III generation nuclear power unit, the unit starts to flush at 15% Pn, the unit starts to connect to the grid at 25% Pn, and the ADG extraction check valve opens at 30% Pn. The ARE flow rate is almost linear with the primary circuit power. Since the state and parameters of the unit vary greatly near 20% Pn, the disturbance of CEX flow rate to ADG pressure in single cascade switching can be reduced greatly by increasing the single cascade switching point to 30%. Therefore, in the present embodiment, the switching condition of single stage to cascade ADG liquid level is that the ARE flow rate is not less than 30%.

S103, when the ARE flow rate is lower than the preset ratio, switching to a "flow rate control" single-stage automatic control mode, switching a CEX closed-loop flow rate mode to a tracking mode, and calculating to obtain a current valve opening degree instruction according to the set flow rate value, an updated first formula and a preset differential pressure correction formula;

S104, when a CEX valve is in a manual state, the flow rate ratio integration unit outputting the valve opening degree instruction, wherein the valve opening degree instruction tracked by the flow rate ratio integration unit is obtained by calculating on the basis of current opening degrees of each valve and values of respective valves according to an updated second formula;

In the present embodiment, as shown in Fig. 1, the outputs of the first formula and the second formula are the valve opening instructions of the CEX valve station. When the second formula is used for manual control mode or CEX flow rate signal failure, the first formula is used for single-stage automatic control. The disturbance of manual and automatic control mode switching mainly arises from the large output deviation of the second formula and the first formula. Therefore, the second formula and the first formula need to be recalibrated in the present embodiment.

Specifically, the media flowing through the CEX valve is an incompressible liquid, and the flow rate through the valve can be calculated according to the flow calculation formula:

$$Q = 0.865 \times C_v \times \sqrt{\Delta P} \qquad (1)$$

In formula (1), the flow coefficient $C_v$ only relates to the valve characteristics.

When the deviation between the actual operating condition $\Delta P$ and the design condition $\Delta P_n$ of the valve is large, the actual flow of the valve is calculated according to formula (2) :

$$Q_0 = 0.865 \times C_v \times \sqrt{\Delta P} \qquad (2)$$

The relationship between the actual flow capacity $Q_0$ and the designed flow capacity $Q_n$ of the valve can be calculated according to formular (3):

$$Q_0 = \frac{\sqrt{\Delta P}}{\sqrt{\Delta P_n}} \times Q_n \qquad (3)$$

CEX valve station valve is a linear flow characteristic valve, and the flow capacity of the entire valve station also has a linear feature. Therefore, for flow Q, valve station opening instruction Y can be calculated according to formula (4):

$$Y = \frac{Q}{Q_0} \times 100\% = \frac{Q}{\frac{\sqrt{\Delta P}}{\sqrt{\Delta P_n}} \times Q_n} \times 100\% = \frac{Q}{Q_n} \times \frac{\sqrt{\Delta P_n}}{\sqrt{\Delta P}} \times 100\% \qquad (4)$$

Formula (4) corresponds to the opening requirement tracking value when the valve is in a manual control mode, corresponding to the first formula in Fig. 1. By contrast, the first formula incorrectly interprets $C_v$ in the flow formula as the valve opening degree and lacks a differential pressure correction.

In the present embodiment, the second formula is used to calculate the valve opening degree tracking value according to the opening degree of each valve in the CEX valve station when the valve is in manual control mode or CEX flow signal failure. The actual flow rate needs to be calculated according to the sum of the flow rates of each valve:

$$Q = \sum_{N=1}^{N=4} Q_N = \frac{\sqrt{\Delta P}}{\sqrt{\Delta P_n}} \times \sum_{N=1}^{N=4} Y_N \times Q_{Nn} \qquad (5)$$

The valve opening degree tracking value is calculated according to formula (6):

$$Y = \frac{Q}{Q_0} \times 100\% = \frac{\frac{\sqrt{\Delta P}}{\sqrt{\Delta P_n}} \times \sum_{N=1}^{N=4} Y_N \times Q_{Nn}}{\frac{\sqrt{\Delta P}}{\sqrt{\Delta P_n}} \times Q_n} \times 100\% = \frac{\sum_{N=1}^{N=4} Y_N \times Q_{Nn}}{Q_n} \times 100\% \qquad (6)$$

Formula (6) corresponds to the second formula in formula (1). However, the second formula misunderstands the Cv value. In practice, $Q_n$ should be used to participate in the calculation of the valve opening degree.

Therefore, the valve actual flow capacity is calibrated in accordance with the actual situation. Considering several regulating valves of the valve station (take 4 as an example) are connected in parallel and the design conditions are same, the valve station design flow capacity is calculated as following:

$$Q_n = \sum_{N=1}^{N=4} Q_{Nn} \qquad (7)$$

Qn can be obtained after obtaining QNn value of each valve.

In the present embodiment, taking the flow rate of a single valve in different valve opening degree Y and different differential pressure ΔP state as an example, the design differential pressure of the valve $\Delta P_n$ = 1.9bar, the flow rate, differential pressure and the opening degree data of CEX2465VL are collected on site, and the data $Q_N$ < 1100 m3/H and Y>85% are excluded.

The comparison between the designed flow capacity and the actual flow capacities of the valves are calculated by linear regression is shown in Table 1.

Table 1 Comparison between the flow capacities of the valves

| valve | Qn$_1$/ (m³/h) (CEX2465VL) | Qn$_2$/(m³/h) (CEX2425VL) | Qn$_3$/(m³/h) (CEX2435VL) | Qn$_4$/(m³/h) (CEX2445VL) | Qn/(m³/h) (valve station) |
|---|---|---|---|---|---|
| Design value | 420 | 1578 | 1578 | 1578 | 5154 |
| After correction | 743 | 2100 | 2100 | 2100 | 7043 |

As can be seen in Table 1, the actual flow capacity of the entire valve station is 36% higher than the design value. In order to guarantee the linearity of the CEX valve station opening degree instruction and the instruction, the opening degree curve of the valve station is further modified.

Specifically, in order to ensure a linear relationship between the valve station instructions and the flow rate, the valve station opening degree curve needs to be corrected according to the actual flow capacity of the valve.

Table 2 Comparation between valve curves before and after correction

| 2465VL opening degree/% | 2425VL opening degree/% | 2435VL opening degree /% | 2445VL opening degree /% | design corresponding flow rate/(m³/h) | corresponding flow rate after correction /(m³/h) |
|---|---|---|---|---|---|
| 0 | 0 | 0 | 0 | 0 | 0 |
| 80 | 0 | 0 | 0 | 435 | 686 |
| 84.2 | 4.2 | 0 | 0 | 522 | 808 |
| 100 | 20 | 0 | 0 | 851 | 1270 |
| 100 | 80 | 0 | 0 | 1773 | 2507 |
| 100 | 90 | 0 | 0 | 1927 | 2713 |
| 100 | 100 | 10 | 0 | 2234 | 3126 |
| 100 | 100 | 20 | 0 | 2388 | 3332 |

(continued)

| 2465VL opening degree/% | 2425VL opening degree/% | 2435VL opening degree /% | 2445VL opening degree /% | design corresponding flow rate/(m³/h) | corresponding flow rate after correction /(m³/h) |
|---|---|---|---|---|---|
| 100 | 100 | 80 | 0 | 3310 | 4569 |
| 100 | 100 | 90 | 10 | 3618 | 4982 |
| 100 | 100 | 100 | 20 | 3925 | 5394 |
| 100 | 100 | 100 | 100 | *5155* | 7044 |
| 100 | 100 | 100 | 100 | *5155* | 7044 |

In the present embodiment, because the output of the flow rate control ratio integration unit does not take into account the deviation between the design operating conditions and the actual operating conditions of the valve station, the differential pressure correction is separated from formula (4) and formula (6) and arranged after the output of the opening degree instruction of the flow rate control ratio integration unit.

Summarizing the above, the second formula is calculated as $Y = \frac{\sum_{N=1}^{N=4} Y_N \times Q_{Nn}}{Q_n} \times \frac{\sqrt{\Delta P}}{\sqrt{\Delta P_n}}$ .

The first formula is calculated as $Y = \frac{Q}{Q_n}$ .

The differential pressure correction processing formula is $Y = \frac{\sqrt{\Delta P_n}}{\sqrt{\Delta P}}$ .

S105, executing an actual action to control the valve according to the valve opening degree instruction and a corrected opening degree curve.

Preferably, the liquid level control method for deaerator of nuclear power unit also includes the step of: in triggering transient working hours, switching a **PI** parameter of the liquid level control ratio integration unit from steady state parameter to transient parameter, and controlling an output value of the flow rate ratio integration unit to respond correspondingly, to slow down sudden increase of liquid level.

At present, the known transient working conditions of the nuclear power unit mainly include unit jump and reactor jump, unit jump without reactor jump, skip-load, dump-factory power, "fast load reduction" of important systems in the unit (including nuclear island side, electric side, and conventional island side), frequency modulation of generator. The conventional ADG liquid level control logic PI can respond effectively and keep the liquid level stable when the change of the unit water supply (ARE side water consumption) is small under different transient conditions. Once the change increase instantaneously, it is difficult to respond in a short time, which will cause a continuous rise of the liquid level.

As shown in Fig. 4, in the present embodiment, the transient trigger, the liquid level control is immediately switched to the transient dedicated PI parameter, and after the pulse, the steady-state PI parameter is slowly switched to carry out the stability adjustment and maintain the ultimate stability of the deaerator liquid level.

Summarizing the above, according to the embodiment of the present invention, the disturbance of ADG liquid level control mode switching can be greatly reduced, the difficulty of ADG liquid level automatic control can be greatly reduced, the problem of reciprocating switch of ADG single cascade control mode can be completely solved, and the hidden trouble of the internal pressure overpressure and safety valve operation of ADG can be eliminated. The timeliness and stability of ADG liquid level control under transient operating conditions are greatly enhanced. The abnormal rise of liquid level cannot be reappeared, which greatly improves the safety and economy of the unit. The quality of automatic operation of the device is improved, the unit jump caused by untimely intervention or failure of intervention by operators under expected or unexpected transient conditions can be avoided, the probability of human error can be effectively reduced, and the economic loss caused by unit jump can be reduced.

Referring to Fig. 5, a second embodiment of the present invention provides a liquid level control apparatus for deaerator of nuclear power unit, including:

an arithmetic unit 210, configured for subjecting a deviation of a current liquid level of an ADG to an operation performed by a liquid level control ratio integration unit, and outputting a set flow rate value;

a first switch unit 220, when an ARE flow rate is not lower than a preset ratio, configured for switching to a "liquid level+flow rate" cascaded control mode, and outputting a valve opening degree instruction by a flow rate ratio integration unit;

a second switch unit 230, when the ARE flow rate is lower than the preset ratio, configured for switching to a "flow rate control" single-stage automatic control mode, switching a CEX closed-loop flow rate mode to a tracking mode, and calculating to obtain a current valve opening degree instruction according to the set flow rate value, an updated first formula and a preset differential pressure correction formula;

a manual control unit 240, when a CEX valve is in a manual state, configured for outputting the valve opening degree instruction by the flow rate ratio integration unit, wherein the valve opening degree instruction tracked by the flow rate ratio integration unit is obtained by calculating on the basis of current opening degrees of each valve and values of respective valves according to a second formula;

an execution unit 250, configured for executing an actual action to control the valve according to the valve opening degree instruction and a corrected opening degree curve.

A third embodiment of the present invention also provides a liquid level control device for deaerator of nuclear power unit including a memory stored with a computer program and a processor, wherein the computer program can be executed by the processor to realize the liquid level control method of the deaerator of the nuclear power unit for deaerator of nuclear power unit as described above.

It should be understood that, in the embodiments as disclosed in the present invention, the apparatus and method can also be realized by other means. The apparatus and method embodiments described above in the present invention are only illustrative, for example, the flowcharts and block diagrams in the drawings show possible architectures, functions, and operations of apparatus, methods, and computer program products according to the embodiments of the present invention. Each block in the flowchart or block diagram can represent a module, program segment, or part of code. The module, the program segment, or a part of code contains one or more executable instructions for implementing a specified logical function.

It should also be noted that, in some alternative embodiments of the present invention, the functions noted in the block can also occur in a different order than those noted in the drawings. For example, two contiguous blocks can actually be executed in essentially parallel, and they can sometimes be executed in an opposite order, depending on the functionality involved. It should also be noted that, each block in the block diagram and/or the flowchart, and the combination of blocks in the block diagram and/or the flowchart, can be implemented with a dedicated hardware-based system that performs a given function or action, or can be implemented with a combination of specialized hardware and computer instructions.

In addition, each functional module in each embodiment of the present invention can be integrated together to form an independent part. Each module can exist separately, and two or more modules can also be integrated to form an independent part.

The functions, if implemented in the form of software function modules and sold or used as a stand-alone product, can be stored in a computer-readable storage medium. Therefore, the technical solution of the present invention can be embodied in the form of a software product in essence, or a portion that contributes to the prior art, or a portion of the technical solution. The computer software product including a number of instructions is stored in a storage medium, to enable a computer device (which may be a personal computer, an electronic device, or a network device) to perform all or part of the steps of the method described in each embodiment of the present invention. The storage medium includes USB disk, removable hard drives, Read-Only Memory (ROM), Random Access Memory (RAM), diskettes or CDs, and a variety of other media that can store program code.

It should be noted that, in the present invention, the terms "include", "comprise", "contain" or any other variant of them are intended to cover non-exclusive inclusion, so that a process, method, article, or device including a set of elements includes not only those elements but also other elements not explicitly listed, or it may include elements inherent in such a process, method, article, or device. In the absence of any further restrictions, elements defined by the term "including one..." do not exclude the existence of additional elements of the same in the process, method, article or device that includes the elements.

## Claims

1. A liquid level control method for deaerator of nuclear power unit, **characterized in that** the liquid level control method for a deaerator of a nuclear power unit comprises the steps of:

   S101, subjecting a deviation of a current liquid level of an ADG to an operation performed by a liquid level control ratio integration unit, outputting a set flow rate value, and in triggering transient working hours, switching a PI parameter of the liquid level control ratio integration unit from steady state parameter to transient parameter, and

controlling an output value of the flow rate ratio integration unit to respond correspondingly, to slow down sudden increase of liquid level;

S102, when an ARE flow rate is not lower than a preset ratio, switching to a "liquid level + flow rate" cascaded control mode, and outputting a valve opening degree instruction by a flow rate ratio integration unit;

S103, when the ARE flow rate is lower than the preset ratio, switching to a "flow rate control" single-stage automatic control mode, switching a CEX closed-loop flow rate mode to a tracking mode, and calculating to obtain a current valve opening degree instruction according to the set flow rate value, a first formula and a preset differential pressure correction formula;

S104, when a CEX valve is in a manual state, the flow rate ratio integration unit outputting the valve opening degree instruction, wherein the valve opening degree instruction tracked by the flow rate ratio integration unit is obtained by calculating on the basis of current opening degrees of each valve and values of respective valves according to a second formula;

S105, executing an actual action to control the valve according to the valve opening degree instruction and a corrected opening degree curve.

2. The liquid level control method for deaerator of nuclear power unit of claim 1, **characterized in that**, the first formula is

$$Y = \frac{Q}{Q_n}$$

wherein Y is a valve opening degree instruction, Q is a flow rate through the valve, Qn is an actual circulation capacity of the valve, Qn is a design circulation capacity of each valve, and $Q_n = \sum_{N=1}^{N=4} Q_{Nn}$.

3. The liquid level control method for deaerator of nuclear power unit of claim 2, **characterized in that**, the second formula is

$$Y = \frac{\sum_{N=1}^{N=4} Y_N \times Q_{Nn}}{Q_n} \times \frac{\sqrt{\Delta P}}{\sqrt{\Delta P_n}}$$

wherein $Y_N$ is the valve opening degree instruction of each valve, $\Delta P_n$ is a design differential pressure of the valve, and $\Delta P$ is an actual differential pressure of the valve.

4. The liquid level control method for deaerator of nuclear power unit of claim 3, **characterized in that**, the differential pressure correction formula is $Y = \frac{\sqrt{\Delta P_n}}{\sqrt{\Delta P}}$.

5. The liquid level control method for deaerator of nuclear power unit of claim 1, **characterized in that**, the preset ratio is 30%.

6. The liquid level control method for deaerator of nuclear power unit of claim 1, **characterized in that**, the corrected opening degree curve is configured to ensure linear relationship between the valve opening degree instruction and the flow rate.

7. A liquid level control apparatus for deaerator of nuclear power unit, **characterized in that** the liquid level control apparatus for deaerator of nuclear power unit comprises:

an arithmetic unit (210), configured for subjecting a deviation of a current liquid level of an ADG to an operation performed by a liquid level control ratio integration unit, outputting a set flow rate value, and in triggering transient working hours, switching a **PI** parameter of the liquid level control ratio integration unit from steady state parameter to transient parameter, and controlling an output value of the flow rate ratio integration unit to respond correspondingly, to slow down sudden increase of liquid level;

a first switch unit (220), when an ARE flow rate is not lower than a preset ratio, configured for switching to a "liquid level+flow rate" cascaded control mode, and outputting a valve opening degree instruction by a flow rate ratio integration unit;

a second switch unit (230), when the ARE flow rate is lower than the preset ratio, configured for switching to a "flow rate control" single-stage automatic control mode, switching a CEX closed-loop flow rate mode to a tracking mode, and calculating to obtain a current valve opening degree instruction according to the set flow rate value, a first formula and a preset differential pressure correction formula;

a manual control unit (240), when a CEX valve is in a manual state, configured for outputting the valve opening degree instruction by the flow rate ratio integration unit, wherein the valve opening degree instruction tracked by the flow rate ratio integration unit is obtained by calculating on the basis of current opening degrees of each valve and values of respective valves according to an updated second formula;

an execution unit (250), configured for executing an actual action to control the valve according to the valve opening degree instruction and a corrected opening degree curve.

8. The liquid level control apparatus for deaerator of nuclear power unit of claim 7, **characterized in that**, the first formula is

$$Y = \frac{Q}{Q_n},$$

wherein Y is a valve opening degree instruction, Q is a flow rate through the valve, Qn is an actual circulation capacity of the valve, $Q_{Nn}$ is a design circulation capacity of each valve, and $Q_n = \sum_{N=1}^{N=4} Q_{Nn}$.

9. The liquid level control apparatus for deaerator of nuclear power unit of claim 7, **characterized in that**, the second formula is

$$Y = \frac{\sum_{N=1}^{N=4} Y_N \times Q_{Nn}}{Q_n} \times \frac{\sqrt{\Delta P}}{\sqrt{\Delta P_n}}$$

wherein $Y_N$ is a valve opening degree instruction of each valve, $\Delta P_n$ is a design differential pressure of the valve, and $\Delta P$ is an actual differential pressure of the valve.

10. The liquid level control apparatus for deaerator of nuclear power unit of claim 9, **characterized in that**, the differential pressure correction formula is $Y = \frac{\sqrt{\Delta P_n}}{\sqrt{\Delta P}}$.

11. A liquid level control device for deaerator of nuclear power unit, **characterized in that**, the liquid level control device for deaerator of nuclear power unit comprises a memory stored with a computer program and a processor, wherein the computer program can be executed by the processor, to perform the liquid level control method for deaerator of nuclear power unit of anyone of claims 1 to 6.

**Patentansprüche**

1. Flüssigkeitsstandsregelungsverfahren für Entlüfter einer Kernkrafteinheit, **dadurch gekennzeichnet, dass** das Flüssigkeitsstandsregelungsverfahren für einen Entlüfter einer Kernkrafteinheit die folgenden Schritte umfasst:

S101, Unterziehen einer Abweichung eines aktuellen Flüssigkeitsstandes eines ADG einem Vorgang, der von einer Flüssigkeitsstandsregelungsverhältnis-Integrationseinheit durchgeführt wird, Ausgeben eines eingestellten Durchflussmengenwerts und beim Auslösen vorübergehender Arbeitsstunden, Umschalten eines PI-Parameters der Flüssigkeitsstandsregelungsverhältnis-Integrationseinheit von einem stationären Parameter auf einen vorübergehenden Parameter und Regeln eines Ausgabewerts der Durchflussmengenverhältnis-Integrationseinheit, um entsprechend zu reagieren, um einen plötzlichen Anstieg des Flüssigkeitsstandes zu verlangsamen;

S102, wenn eine ARE-Durchflussmenge nicht geringer als ein voreingestelltes Verhältnis ist, Umschalten auf einen kaskadierten Regelungsmodus "Flüssigkeitsstand + Durchflussmenge" und Ausgeben einer Ventilöffnungsgradanweisung durch eine Durchflussmengenverhältnis-Integrationseinheit;

S103, wenn die ARE-Durchflussmenge geringer als das voreingestellte Verhältnis ist, Umschalten auf einen einstufigen automatischen Regelungsmodus "Durchflussmengenregelung", Umschalten eines CEX-Durchflussmengenmodus mit geschlossenem Regelkreis auf einen Nachverfolgungsmodus und Berechnen, um eine aktuelle Ventilöffnungsgradanweisung gemäß dem eingestellten Durchflussmengenwert, einer ersten Formel und einer voreingestellten Differenzdruckkorrekturformel zu erhalten;
S104, wenn sich ein CEX-Ventil in einem manuellen Zustand befindet, gibt die Durchflussmengenverhältnis-Integrationseinheit die Ventilöffnungsgradanweisung aus, wobei die Ventilöffnungsgradanweisung, die von der Durchflussmengenverhältnis-Integrationseinheit verfolgt wird, durch Berechnen basierend auf aktuellen Öffnungsgraden jedes Ventils und Werten jeweiliger Ventile gemäß einer zweiten Formel erhalten wird;
S105, Ausführen einer tatsächlichen Aktion zum Regeln des Ventils gemäß der Ventilöffnungsgradanweisung und einer korrigierten Öffnungsgradkennlinie.

2. Flüssigkeitsstandsregelungsverfahren für Entlüfter einer Kernkrafteinheit nach Anspruch 1, **dadurch gekennzeichnet, dass** die erste Formel Folgendes ist

$$Y = \frac{Q}{Q_n}$$

wobei Y eine Ventilöffnungsgradanweisung ist, Q eine Durchflussmenge durch das Ventil ist, Qn eine tatsächliche Zirkulationsleistung des Ventils ist, Qn eine Auslegungszirkulationsleistung jedes Ventils ist und

$$Q_n = \sum_{N=1}^{N=4} Q_{Nn}$$.

3. Flüssigkeitsstandsregelungsverfahren für Entlüfter einer Kernkrafteinheit nach Anspruch 2, **dadurch gekennzeichnet, dass** die zweite Formel Folgendes ist

$$Y = \frac{\sum_{N=1}^{N=4} Y_N \times Q_{Nn}}{Q_n} \times \frac{\sqrt{\Delta P}}{\sqrt{\Delta P_n}}$$

wobei $Y_N$ die Ventilöffnungsgradanweisung jedes Ventils ist, $\Delta P_n$ ein Auslegungsdifferenzdruck des Ventils ist und $\Delta P$ ein tatsächlicher Differenzdruck des Ventils ist.

4. Flüssigkeitsstandsregelungsverfahren für Entlüfter einer Kernkrafteinheit nach Anspruch 3, **dadurch gekennzeichnet, dass** die Differenzdruckkorrekturformel $Y = \frac{\sqrt{\Delta P_n}}{\sqrt{\Delta P}}$ ist.

5. Flüssigkeitsstandsregelungsverfahren für Entlüfter einer Kernkrafteinheit nach Anspruch 1, **dadurch gekennzeichnet, dass**
das voreingestellte Verhältnis 30 % beträgt.

6. Flüssigkeitsstandsregelungsverfahren für Entlüfter einer Kernkrafteinheit nach Anspruch 1, **dadurch gekennzeichnet, dass** die korrigierte Öffnungsgradkennlinie dazu konfiguriert ist, eine lineare Beziehung zwischen der Ventilöffnungsgradanweisung und der Durchflussmenge sicherzustellen.

7. Flüssigkeitsstandsregelungsvorrichtung für Entlüfter einer Kernkrafteinheit, **dadurch gekennzeichnet, dass** die Flüssigkeitsstandsregelungsvorrichtung für Entlüfter einer Kernkrafteinheit Folgendes umfasst:

eine arithmetische Einheit (210), die zum Unterziehen einer Abweichung eines aktuellen Flüssigkeitsstandes eines ADG einem Vorgang, der von einer Flüssigkeitsstandsregelungsverhältnis-Integrationseinheit durchgeführt wird, Ausgeben eines eingestellten Durchflussmengenwerts und beim Auslösen vorübergehender Arbeitsstunden, Umschalten eines PI-Parameters der Flüssigkeitsstandsregelungsverhältnis-Integrationseinheit von einem stationären Parameter auf einen vorübergehenden Parameter und Regeln eines Ausgabewerts der Durchflussmengenverhältnis-Integrationseinheit, um entsprechend zu reagieren, um einen plötzlichen Anstieg des Flüssigkeitsstandes zu verlangsamen, konfiguriert ist;
eine erste Schalteinheit (220), wenn eine ARE-Durchflussmenge nicht geringer als ein voreingestelltes Verhältnis ist, die zum Umschalten auf einen kaskadierten Regelungsmodus "Flüssigkeitsstand+Durchflussmenge" und Ausgeben einer Ventilöffnungsgradanweisung durch eine Durchflussmengenverhältnis-Integrationseinheit konfiguriert ist;

eine zweite Schalteinheit (230), wenn die ARE-Durchflussmenge geringer als das voreingestellte Verhältnis ist, die zum Umschalten auf einen einstufigen automatischen Regelungsmodus "Durchflussmengenregelung", Umschalten eines CEX-Durchflussmengenmodus mit geschlossenem Regelkreis auf einen Nachverfolgungsmodus und Berechnen, um eine aktuelle Ventilöffnungsgradanweisung gemäß dem eingestellten Durchflussmengenwert, einer ersten Formel und einer voreingestellten Differenzdruckkorrekturformel zu erhalten, konfiguriert ist;

eine manuelle Steuereinheit (240), wenn sich ein CEX-Ventil in einem manuellen Zustand befindet, die zum Ausgeben der Ventilöffnungsgradanweisung durch die Durchflussmengenverhältnis-Integrationseinheit konfiguriert ist, wobei die Ventilöffnungsgradanweisung, die von der Durchflussmengenverhältnis-Integrationseinheit verfolgt wird, durch Berechnen basierend auf aktuellen Öffnungsgraden jedes Ventils und Werten jeweiliger Ventile gemäß einer aktualisierten zweiten Formel erhalten wird;

eine Ausführungseinheit (250), die zum Ausführen einer tatsächlichen Aktion zum Regeln des Ventils gemäß der Ventilöffnungsgradanweisung und einer korrigierten Öffnungsgradkennlinie konfiguriert ist.

8. Flüssigkeitsstandsregelungsvorrichtung für Entlüfter einer Kernkrafteinheit nach Anspruch 7, **dadurch gekennzeichnet, dass** die erste Formel Folgendes ist

$$Y = \frac{Q}{Q_n},$$

wobei Y eine Ventilöffnungsgradanweisung ist, Q eine Durchflussmenge durch das Ventil ist, Qn eine tatsächliche Zirkulationsleistung des Ventils ist, $Q_{Nn}$ eine Auslegungszirkulationsleistung jedes Ventils ist und

$$Q_n = \sum_{N=1}^{N=4} Q_{Nn}.$$

9. Flüssigkeitsstandsregelungsvorrichtung für Entlüfter einer Kernkrafteinheit nach Anspruch 7, **dadurch gekennzeichnet, dass** die zweite Formel Folgendes ist

$$Y = \frac{\sum_{N=1}^{N=4} Y_N \times Q_{Nn}}{Q_n} \times \frac{\sqrt{\Delta P}}{\sqrt{\Delta P_n}}$$

wobei $Y_N$ eine Ventilöffnungsgradanweisung jedes Ventils ist, $\Delta P_n$ ein Auslegungsdifferenzdruck des Ventils ist und $\Delta P$ ein tatsächlicher Differenzdruck des Ventils ist.

10. Flüssigkeitsstandsregelungsvorrichtung für Entlüfter einer Kernkrafteinheit nach Anspruch 9, **dadurch gekennzeichnet, dass** die Differenzdruckkorrekturformel $Y = \frac{\sqrt{\Delta P_n}}{\sqrt{\Delta P}}$ ist.

11. Flüssigkeitsstandsregelungseinrichtung für Entlüfter einer Kernkrafteinheit, **dadurch gekennzeichnet, dass** die Flüssigkeitsstandsregelungsvorrichtung für Entlüfter einer Kernkrafteinheit einen Speicher, bei dem ein Computerprogramm gespeichert ist, und einen Prozessor umfasst, wobei das Computerprogramm durch den Prozessor ausgeführt werden kann, um das Flüssigkeitsstandsregelungsverfahren für Entlüfter einer Kernkrafteinheit nach einem der Ansprüche 1 bis 6 durchzuführen.

## Revendications

1. Procédé de commande de niveau de liquide pour dégazeur d'unité de puissance nucléaire, **caractérisé en ce que** le procédé de commande de niveau de liquide pour dégazeur d'unité de puissance nucléaire comprend les étapes de :

S101, soumission d'une déviation d'un niveau de liquide actuel d'un ADG à une opération réalisée par une unité d'intégration de rapport de commande de niveau de liquide, délivrance en sortie d'une valeur de débit définie, et lors d'un déclenchement d'heures de travail transitoires, fait de faire passer un paramètre PI de l'unité d'intégration de rapport de commande de niveau de liquide d'un paramètre d'état stationnaire à un paramètre transitoire, et commande à une valeur de sortie de l'unité d'intégration de rapport de débit de répondre en conséquence, pour ralentir l'augmentation soudaine du niveau de liquide ;

S102, lorsqu'un débit ARE n'est pas inférieur à un rapport prédéfini, passage à un mode de commande en cascade « niveau de liquide + débit », et délivrance en sortie d'une instruction de degré d'ouverture de soupape par une unité d'intégration de rapport de débit ;

S103, lorsque le débit ARE est inférieur au rapport prédéfini, passage à un mode de commande automatique à un seul étage « commande de débit », fait de faire passer un mode de débit en boucle fermée de CEX à un mode de suivi, et calcul pour obtenir une instruction de degré d'ouverture de soupape actuel selon la valeur de débit définie, une première formule et une formule de correction de pression différentielle prédéfinie ;

S104, lorsqu'une soupape CEX est dans un état manuel, délivrance en sortie, par l'unité d'intégration de rapport de débit, de l'instruction de degré d'ouverture de soupape, dans lequel l'instruction de degré d'ouverture de soupape suivie par l'unité d'intégration de rapport de débit est obtenue en calculant sur la base de degrés d'ouverture actuels de chaque soupape et de valeurs de soupapes respectives selon une seconde formule ;

S105, exécution d'une action réelle pour commander la soupape selon l'instruction de degré d'ouverture de soupape et une courbe de degré d'ouverture corrigée.

2. Procédé de commande de niveau de liquide pour dégazeur d'unité de puissance nucléaire de la revendication 1, **caractérisé en ce que** la première formule est

$$Y = \frac{Q}{Q_n}$$

dans lequel Y est une instruction de degré d'ouverture de soupape, Q est un débit à travers la soupape, Qn est une capacité de circulation réelle de la soupape, Qn est une capacité de circulation de conception de chaque soupape, et

$$Q_n = \sum_{N=1}^{N=4} Q_{Nn}$$ .

3. Procédé de commande de niveau de liquide pour dégazeur d'unité de puissance nucléaire de la revendication 2, **caractérisé en ce que** la seconde formule est

$$Y = \frac{\sum_{N=1}^{N=4} Y_N \times Q_{Nn}}{Q_n} \times \frac{\sqrt{\Delta P}}{\sqrt{\Delta P_n}}$$

dans lequel $Y_N$ est l'instruction de degré d'ouverture de soupape de chaque soupape, $\Delta P_n$ est une pression différentielle de conception de la soupape, et $\Delta P$ est une pression différentielle réelle de la soupape.

4. Procédé de commande de niveau de liquide pour dégazeur d'unité de puissance nucléaire de la revendication 3, **caractérisé en ce que** la formule de correction de pression différentielle est $Y = \frac{\sqrt{\Delta P_n}}{\sqrt{\Delta P}}$ .

5. Procédé de commande de niveau de liquide pour dégazeur d'unité de puissance nucléaire de la revendication 1, **caractérisé en ce que**, le rapport prédéfini est de 30 %.

6. Procédé de commande de niveau de liquide pour dégazeur d'unité de puissance nucléaire de la revendication 1, **caractérisé en ce que** la courbe de degré d'ouverture corrigée est configurée pour assurer une relation linéaire entre l'instruction de degré d'ouverture de soupape et le débit.

7. Appareil de commande de niveau de liquide pour dégazeur d'unité de puissance nucléaire, **caractérisé en ce que** l'appareil de commande de niveau de liquide pour dégazeur d'unité de puissance nucléaire comprend :

une unité arithmétique (210), configurée pour soumettre une déviation d'un niveau de liquide actuel d'un ADG à une opération réalisée par une unité d'intégration de rapport de commande de niveau de liquide, délivrer en sortie une valeur de débit définie, et lors d'un déclenchement d'heures de travail transitoires, faire passer un paramètre PI de l'unité d'intégration de rapport de commande de niveau de liquide d'un paramètre d'état stationnaire à un paramètre transitoire, et commander à une valeur de sortie de l'unité d'intégration de rapport de débit de répondre en conséquence, pour ralentir l'augmentation soudaine du niveau de liquide ;

une première unité de commutation (220), lorsqu'un débit ARE n'est pas inférieur à un rapport prédéfini, configurée pour passer à un mode de commande en cascade « niveau de liquide +débit », et délivrer en sortie une instruction de degré d'ouverture de soupape par une unité d'intégration de rapport de débit ;

une seconde unité de commutation (230), lorsque le débit ARE est inférieur au rapport prédéfini, configurée pour passer à un mode de commande automatique à un seul étage « commande de débit », faire passer un mode de débit en boucle fermée de CEX à un mode de suivi, et calculer pour obtenir une instruction de degré d'ouverture de soupape actuel selon la valeur de débit définie, une première formule et une formule de correction de pression différentielle prédéfinie ;

une unité de commande manuelle (240), lorsqu'une soupape CEX est dans un état manuel, configurée pour délivrer en sortie l'instruction de degré d'ouverture de soupape par l'unité d'intégration de rapport de débit, dans lequel l'instruction de degré d'ouverture de soupape suivie par l'unité d'intégration de rapport de débit est obtenue en calculant sur la base de degrés d'ouverture actuels de chaque soupape et de valeurs de soupapes respectives selon une seconde formule mise à jour ;

une unité d'exécution (250), configurée pour exécuter une action réelle pour commander la soupape selon l'instruction de degré d'ouverture de soupape et une courbe de degré d'ouverture corrigée.

8. Appareil de commande de niveau de liquide pour dégazeur d'unité de puissance nucléaire de la revendication 7, **caractérisé en ce que** la première formule est

$$Y = \frac{Q}{Q_n},$$

dans lequel Y est une instruction de degré d'ouverture de soupape, Q est un débit à travers la soupape, Qn est une capacité de circulation réelle de la soupape, $Q_{Nn}$ est une capacité de circulation de conception de chaque soupape, et

$$Q_n = \sum_{N=1}^{N=4} Q_{Nn}.$$

9. Appareil de commande de niveau de liquide pour dégazeur d'unité de puissance nucléaire de la revendication 7, **caractérisé en ce que** la seconde formule est

$$Y = \frac{\sum_{N=1}^{N=4} Y_N \times Q_{Nn}}{Q_n} \times \frac{\sqrt{\Delta P}}{\sqrt{\Delta P_n}}$$

dans lequel $Y_N$ est une instruction de degré d'ouverture de soupape de chaque soupape, $\Delta P_n$ est une pression différentielle de conception de la soupape, et $\Delta P$ est une pression différentielle réelle de la soupape.

10. Appareil de commande de niveau de liquide pour dégazeur d'unité de puissance nucléaire de la revendication 9, **caractérisé en ce que** la formule de correction de pression différentielle est $Y = \frac{\sqrt{\Delta P_n}}{\sqrt{\Delta P}}$.

11. Dispositif de commande de niveau de liquide pour dégazeur d'unité de puissance nucléaire, **caractérisé en ce que** le dispositif de commande de niveau de liquide pour dégazeur d'unité de puissance nucléaire comprend une mémoire stockée avec un programme informatique et un processeur, dans lequel le programme informatique peut être exécuté par le processeur, pour réaliser le procédé de commande de niveau de liquide pour dégazeur d'unité de puissance nucléaire de l'une quelconque des revendications 1 à 6.

Fig. 1

**S101** — subjecting a deviation of a current liquid level of an ADG to an operation performed by a liquid level control ratio integration unit, and outputting a set flow rate value

**S102** — when an ARE flow rate is not lower than a preset ratio, switching to a cascaded control mode of "liquid level+flow rate", and a flow rate ratio integration unit outputting a valve opening degree instruction

**S103** — when the ARE flow rate is lower than the preset ratio, switching to a single-stage automatic control mode of "flow rate control", switching a CEX closed-loop flow rate mode to a tracking mode, and calculating to obtain a valve opening degree instruction according to the set flow rate value, an updated first formula and a preset differential pressure correction formula

**S104** — when a CEX valve is in a manual state, the flow rate ratio integration unit outputting the valve opening degree instruction, wherein the valve opening degree instruction tracked by the flow rate ratio integration unit is obtained by calculating on the basis of current opening degrees of each valve and values of respective valves according to an updated second formula

**S105** — executing an actual action to control the valve according to the valve opening degree instruction and a corrected opening degree curve

Fig. 2

second formula $\quad Y = \dfrac{\sum_{N=1}^{N=4} Y_N \times Q_{Nn}}{Q_n} \times \dfrac{\sqrt{\Delta P}}{\sqrt{\Delta P_n}}$

$$Y = \frac{x}{Q_n}$$

first formula

CEX valve manual control

CEX valve flow rate-opening degree curve

polygonal function

$y = f_1(x)$

liquid level setting module

liquid level control ratio integration unit

PI (steady state)

PI (transient state)

tracking

$\Sigma$

flow rate control mode

$\geqslant 1$

CEX valve manual control

liquid level setting module

flow rate control ratio integration unit

$+$ $\Sigma$ $-$

PI

tracking

differential pressure correction

$\dfrac{\sqrt{\Delta P_n}}{\sqrt{\Delta P}}$

polygonal function

$y = f_2(x)$

<30%

MD

MN

ADG

MD

SG

ARE valve

APA pump

CEX valve station

CEX pump

CEX

**Fig. 3**

high power transient state

manually set

set value

(steady state)

PI 1

PI 1

(transient state)

F(x)

PI 2

MP

MN

2.5bar.a

PI

VPU

ADG1215VV

ADG TANK

evaporator

MD

APA

MD

CEX

**Fig. 4**

| arithmetic unit 210 | first switch unit 220 | second switch unit 230 | manual control unit 240 |
|---|---|---|---|

execution unit 250

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20050010328 A
- US 2016189807 A1
- KR 100584835 B1